# EUROPEAN PATENT APPLICATION

(11) **EP 4 215 480 A1**
(43) Date of publication of application: **26.07.2023**
(21) Application number: 22152929.0
(22) Date of filing: 24.01.2022
(51) Int. Cl.: C01B 32/05

(54) **IMPROVED PARTICLE COATING METHOD**

(71) Applicant: Rain Carbon bv, 9060 Zelzate (BE); Rain Carbon Germany GmbH, 44579 Castrop-Rauxel (DE)
(72) Inventor: Spahr, Michael, 9060 Zelzate (BE); Kuhnt, Christopher, 44579 Castrop-Rauxel (DE); Claes, Joris, 9060 Zelzate (BE)
(74) Representative: BiiP cvba

(57) **Abstract**

The present invention is directed to a method for producing carbon coated particles or aggregates of carbon coated particles, the method comprising:
- providing a number of particles to be coated,
- producing an intermediate molten pitch product,
- directly dispersing the intermediate pitch product on the particles,
- subsequently carbonizing the particles.

In addition, the present invention is directed to a method of manufacturing a battery electrode comprising said method for producing said carbon-coated particles or said aggregates of carbon coated particles.

## Description

### TECHNICAL FIELD

The present invention generally relates to the production of carbon-coated particles and aggregates of carbon-coated particles, in particular to the manufacturing of battery electrodes, more specifically Li-Ion batteries.

### BACKGROUND

Commercially supplied negative electrode material is conventionally based on graphite but also more and more on silicon oxide, metal silicon, silicon alloy, and composites of carbon or graphite with materials based on silicon, tin, and other elements.

Many of these negative electrode materials are coated with a thin carbon coating using coal tar pitch and petroleum-based pitch as carbon precursors. Several processes are known to obtain a suitable coating. For instance, a wet process can be used comprising dissolving dried and ground pitch in a solvent as for example discussed in US9096473B2 (CONOCO PHILLIPS). Another technique is dispersing the milled fine pitch powder in water, mixing the solution or suspension with the particles and drying the mixture before in both cases heat-treating it in an inert gas atmosphere at elevated temperatures of 600°C-1300°C to perform the carbonization of the pitch coating. Further, also dry-coating processes are used in which the finely milled pitch is mixed at high shear energy with the electrode material particles. The mixture then is heated in an inert gas atmosphere to form the superficial carbon layer and finally carbonized or, if required, graphitized.

A general issue with the above techniques is that milling of the coal tar- and petroleum-based precursor materials can only be done if the solid materials are brittle enough, usually at softening points higher than 120°C, or lower if cryogenic grinding is applied. Besides the costs that the grinding process adds to the product, the mechanical impact of the material with the equipment causes contamination with metal impurities like iron and stainless steel being unwanted impurities in the carbon precursor and resulting electrode material. The possibility of pitch dust formation being harmful to human beings and environment and prone to dust explosion when exposed to air requires special care during milling, for example the use of closed casings (or containments), pressure shock resisting equipment, and/or milling in a nitrogen atmosphere, resulting in increased production cost.

A coating method where the milling of coal tar- and petroleum-based precursor materials is avoided is based on chemical vapor deposition (CVD) of a hydrocarbon gas or vapor like methane, propane, acetylene or vaporized benzene, toluene, and xylene mixed with a nitrogen gas stream and inserted into a fluidized bed of the carbon particles at temperatures above 600°C. The surface of each particle needs to be surrounded by reactive gas to allow the formation of a homogeneous coating. Therefore, a good fluidization of the particles in the reactive gas/carrier gas mixture is essential, typically realized in fluidized bed processes. CVD coatings with hydrocarbon gas or vapor leads to more confined carbon coatings at the particle surface than coatings with liquid or solid hydrocarbon precursors but the carbon yield of the gaseous precursors usually is lower.

A drawback of the CVD-based method however is that the reduction of the BET specific surface area (BET SSA) targeted with the carbon coating is less efficient in the case of CVD compared to the coating with pitch-based carbon precursors. Further, the type of carbon formed during the CVD process, so-called pyrolytic carbon, turns out to be less compatible with the electrolytes used in the battery, so usually with increasing carbon coating needed to reduce the BET SSA of the carbon powder the electrochemical performance reaches an optimum at a certain carbon concentration but with higher carbon amount deteriorates again. In addition, the scalability of the CVD process is limited, therefore industrial CVD processes like fluidized bed processes typically add significant costs to the product.

Furthermore, a problem specifically related to dry pitch coating is that the carbon coating is not always homogeneously distributed over the electrode particle surfaces, such that a relatively high amount, i.e. a relatively thick film, of carbon is required to completely cover the particle surface to reduce the BET specific surface area, the interface area and the reactivity of the graphite electrode towards the electrolyte. Low surface area carbon coatings improve electrochemical parameters of the graphitic carbon particles by decreasing charge losses, improving cell safety and charge/discharge cycling stability. However, as the carbon formed at the particle surface contributes less to the reversible capacity of the electrode material compared to the graphitic particle core, and as the thickness of the carbon layer also influences the insertion rate of lithium ions in the bulk, thinner coatings are preferred. Improvements of the electrochemical performance by low surface area carbon coatings are also reported for silicon-containing particulate electrode materials.

Solvent-based techniques are known to obtain more homogeneous and thinner carbon coating layers than in the case of the dry process, however the handling of the solvent especially with regards to safety considerations due to low flash points of most of suitable solvents as well as the required drying and condensing of the evaporated solvent makes solvent-based techniques costly.

Given the above, it is a general objective of the present invention to provide an alternative method for producing carbon-coated particles with reduced processing cost and being more environmentally friendly.

In particular it is an objective of the present invention to provide a method for producing carbon-coated particles having a thinner coating layer than typically achieved by dry-coating techniques and avoiding the use of solvent. The particles being coated are micron size between 1 and 50 micron average particle size. Typical coating thicknesses are in the range of several tens of nanometers but as a general rule the thinner the homogeneous coating at a minimum carbon amount required to form the homogeneous coating is, the better is the electrochemical performance.

Another objective of the present invention is to provide a method for producing carbon-coated particles with enhanced quality of the coating layer formed.

Another general objective of the present invention is to provide a method for producing carbon-coated particles resulting in similar processing and performance of targeted electrode materials in battery electrodes, in particular Li-ion batteries.

Another general objective is to provide a suitable carbon precursor to be applied in the coating method of the present invention.

In addition, it is a general objective of the present invention as well to provide an alternative method for producing aggregates of carbon-coated particles with reduced processing cost and being more environmentally friendly.

### SUMMARY

The present invention is directed to a method for producing carbon coated particles, the method comprising:
- providing a number of particles to be coated,
- producing an intermediate molten pitch product,
- directly dispersing the intermediate molten (liquid) pitch product on the particles,
- subsequently carbonizing the particles.

In an embodiment of the present invention, the amount of intermediate molten pitch product dispersed on the particles is at least 10% by weight thereby obtaining aggregates of said carbon coated particles.

In addition, the present invention is directed to a method of manufacturing a battery electrode comprising said method for producing said carbon-coated particles or said method for producing aggregates of carbon coated particles.

### DETAILED DESCRIPTION

In a first embodiment of the present invention, a method for producing carbon-coated particles is provided, the method comprising:
- providing a number of particles to be coated
- producing an intermediate molten pitch product
- directly dispersing the intermediate pitch product on the particles
- subsequently carbonizing the particles.

In the context of the present invention, particles to be coated may be all types of particles used in the field of manufacturing electrodes for batteries such as batteries for consumer electronics, electric vehicles, and energy storage units for renewable electricity, and, particularly in the manufacturing of negative electrodes of lithium-ion batteries. The particles to be coated may be carbonaceous or composites. Particulate materials may be natural or synthetic graphite, silicon oxide, metal silicon, silicon alloy, and composites of carbon or graphite with materials based on silicon and tin. Average particle size is typically between 10 and 25 micron and typically with a maximum particle size of up to 50 micron.

In an embodiment of the present invention, the particles to be coated may be preheated according to process needs to ensure sufficient wetting of the intermediate molten pitch product.

In the context of the present invention, the intermediate molten pitch product may be any carbon residue-forming pitch product suitable to be used as carbon coating precursor and suitable to be dispersed on the particles directly upon being freshly produced, i.e. suitable to be dispersed in still molten (liquid) state. Such intermediate molten pitch product is neither solidified, nor dissolved (i.e. does not comprise any added solvent), nor remelted prior to dispersing.

In an embodiment of the present invention, dispersing the intermediate molten pitch product on the particles to be coated may comprise spraying, e.g. airless spraying through a spray nozzle. Optionally meanwhile the particles may be fluidized by a suitable mixer, stirrer, or by a gas stream. Alternatively, dispersing may comprise intensive mixing of molten pitch product and the particles, e.g. by means of an intensive mixing unit. Optionally, the particles coated with the molten pitch product may be isolated by cooling the particles mixture to room temperature while stirring.

Subsequently to dispersing, the molten pitch product dispersed on the particles is carbonized. In an embodiment, this method step comprises one or several heat-treatment steps between 550-1400 °C in a nitrogen inert gas atmosphere while the particle mixture still is kept in motion by the mixer or stirrer. Alternatively, the cooled particle mixture is carbonized in a furnace that could be a tunnel furnace, a roller kiln furnace, a chamber furnace, or a rotary kiln furnace.

Optionally graphitization at a temperature above 2000°C may follow carbonization, aiming to increase the crystallinity of the coating layer.

A general benefit of the present invention is that, by directly dispersing the intermediate pitch product in the molten state on the particles without intermediate cooling and solidifying, granulation, milling, dissolving or remelting, a number of method steps in the conventional manufacturing of carbon-coated particles are rationalized resulting in significant reduction of method cost, safety issues, and environmental impact.

Another advantage of a method in accordance with the present invention may be that the coating method results in good particle surface coverage and a homogeneous carbon film of a few tens of nanometers that causes a decrease of the BET specific surface area and improved electrode performance as compared to other coating techniques. In addition, the use of organic solvents like tetrahydrofuran or toluene used in solvent-based coating techniques can be avoided and, with this, the dissolution of the pitch in the solvent and the drying process after the pitch solution is mixed in the particle mass to be coated as well as the recovery process of the solvent. This facilitates the coating process installation and reduces the costs.

In an embodiment of the present invention, the intermediate molten pitch product is coal tar- and/or petroleum-based.

In an embodiment in accordance with the present invention, the intermediate molten pitch product as used in the present invention may have a softening point <260°C, and preferably below 150°C, and most preferably below 120°C Mettler, which allows lower processing temperatures.

Further, the intermediate molten pitch product may have a melt viscosity between 10-3000 mPa.s. at the temperature of use, or preferably 50-1000 mPa s at the temperature of use in order to enable efficient dispersing.

In another embodiment in accordance with the present invention, the intermediate molten pitch product may additionally have one or more of the following characteristics:
- Coke value between 30-70 % ALCAN
- Flash point >200 °C, preferably above 250°C
- quinoline insoluble matter below 1 %

A sufficiently high flash point is known to limit safety issues, while a sufficiently low quinoline insoluble content avoids clogging of the spray nozzles in case of dispersing the intermediate molten pitch product by spraying.

Preferably, the molten intermediate pitch product as used in the present invention may have low viscosity at low temperatures, low softening point combined with high coking yield and flash point. These parameters may contribute to a combination of improved carbonization, less safety issues, low processing temperatures combined with easy processing in molten state, a high coverage rate and good wetting of the particle surface resulting in a significant reduction of the BET specific surface area of the particles that are coated. In addition, the manufacturing cost of carbon coating particles is significantly reduced. Further, as the coating process is performed in a closed reactor and the solid pitch dust created by pitch milling to micron size particles is avoided, environmental impact is reduced as well.

In a preferred embodiment, the intermediate molten pitch product to be used may have a softening point below 120°C Mettler; a melt viscosity lower than 1000 mPa.s at 140°C, a coke value between 30-70 %, a flash point above 250°C, and quinoline insoluble matter below 1%.

In a specific embodiment of the present invention, the intermediate molten pitch product to be used may be based on petroleum-based raw materials. More specifically, this pitch product may be characterized by a flashpoint of above 250°C and a softening point between 100 and 200°C Mettler, and more preferably between 120-180°C Mettler. Such pitch may have a high flashpoint and coke value being similar to coal tar-based pitch at drastically reduced carcinogenic benzo[a]pyrene, B[a}P, content as well as low viscosities meeting the requirements of the molten coating material.

In another specific embodiment in accordance with the present invention, the intermediate molten pitch product to be used may be coal tar-based or petroleum-based distillation residue, or a blend thereof, or preferably distillation residue based on a heavy distillate fraction of the coal tar or petroleum distillation, or a blend thereof.

More specifically, the distillation residue of the heavy distillate fraction of the coal tar or petroleum distillation may have a softening point between 70-120°C and a coking value of 40-59%, or 44 to 59% (ALCAN). Such coating material contains a very low amount or substantially no solid particles being an advantage in the spraying method as nozzle clogging is avoided as well as it supports the formation of a homogeneous thin layer coating at the particle surface.

Optionally, such distillation residue of the heavy distillate fraction of the coal tar or petroleum distillation may additionally comprise a petroleum-based pitch having a softening point between 110-270°C, preferably between 130-180°C. The petroleum-based pitch reduces the B[a]P content of the coal tar pitch-containing blend.

In an additional embodiment of the present invention, the amount of intermediate molten pitch product dispersed on the particles is at least 10%weight thereby resulting in aggregates of carbon coated particles. The amount of dispersed molten pitch product may determine whether the particles are coated or coated and aggregated. For coated and aggregated particles, the required amount of dispersed molten pitch may be at least 10%weight of the carbon coating particles, or at least 12% by weight, and preferably between 15 and 20%weight. Consequently, for coated but not aggregated particles the required amount of dispersed molten pitch may be less than 12%weight of the carbon coating particles, or less than 10%weight, and even less than 8%weight. At molten pitch amounts preferably being above 10 wt.%, particles may aggregate to larger particle sizes and result in aggregates of coated particles. Particles being finer than the typical average particle size may aggregate easier and result in aggregates of coated particles with typical particle size.

In addition, a method of manufacturing a battery electrode is provided comprising the method of manufacturing carbon-coated particles as described throughout this text. These electrodes may be suitable electrodes for batteries for consumer electronics, electric vehicles, and battery energy storage units for renewable electricity, and, in particular, as negative electrodes of lithium-ion batteries.

The following example illustrated an embodiment of a method in accordance with the present invention:
EXAMPLE : 446 g of molten hot liquid pitch product with a softening point Mettler of 87.4°C was added to 4.5 kg of preheated spherical graphite (BET SSA of 6 m²/g) in a heated intensive mixer. Both materials were mixed for 5 min at a temperature of 170°C at high intensity, afterwards mixing intensity was reduced, and the mixer was cooled until the material temperature was 20°C below the softening point of the pitch product used. The material was removed, cooled to room temperature, and transferred to crucible where it was carbonized at 1100°C for 5 h using a heating rate of 100 °C/h.
With the coating method using hot liquid pitch, the initial BET SSA of the initial spherical graphite of 6 m²/g could be reduced to 2.3 m²/g of the coated spherical graphite.

| **Intermediate pitch product pro perties** | | | | |
|---|---|---|---|---|
| | | | | A TE-26892 |
| **SPM** | | DIN 51920 | [°C] | 87.7 |
| **TI** | | DIN 51906 | [%] | 3.5 |
| **QI** | | DIN 51921 | [%] | 0.92 |
| **beta-resin** | | | [%] | 2.58 |
| **Alcan** | | DIN 51905 | [%] | 48.9 |
| **Ash** | | DIN 51922 | [%] | 0.02 |
| **Viscosity** | | DIN 53019 | [mPas] | CC27 |
| | 120 °C | | | 2592 |
| | 140 °C | | | 339 |
| | 160 °C | | | 86 |
| | 180 °C | | | 33 |
| | 200 °C | | | 17 |
| | | | | |
| **weight loss** | TGA | | [%] | |
| | 150 °C | | | 0.1 |
| | 230 °C | | | 0.3 |
| | 270 °C | | | 0.6 |
| | 360 °C | | | 13.4 |
| | 440 °C | | | 75.1 |
| | 520 °C | | | 82.4 |
| | 600 °C | | | 82.7 |
| | 750 °C | | | 83.3 |
| | 900 °C | | | 83.6 |
| | 1000 °C | | | 83.9 |
| | | | | |

| **Spherical graphite properties** | | | | |
|---|---|---|---|---|
| | | Spherical Graphite substrate | | |
| **Tap density** | [g/cm³] | 0.955 | | |
| **BET specific surface area** | [m²/g] | 6.0 | | |
| **Particle size distribution (Malvern Mastersizer 3000, particle dispersion in water)** | | | | |
| **d10** | [µm] | 11.3 | | |
| **d50** | [µm] | 16.6 | | |
| **d90** | [µm] | 24.3 | | |
| | | | | |

Below table provides an overview of analytical procedures of the product parameters as used in this text:

| **Analysis** | **Unit** | **Norm/Method** |
|---|---|---|
| Softening point, Mettler | ⁰C | ASTM D3104 |
| Quinoline insoluble matter, QI | % (by weight) | DIN 51921 |
| Toluene insoluble matter, TI | % (by weight) | DIN 51906 |
| Beta-resi ns | % (by weight) | Calculation TI-QI |
| Coke yield (value), Alcan | % (by weight) | ASTM D4715 |
| Ash (900 °C) | % (by weight) | ASTM D2415 |
| Benzo[a]pyrene (B[a]P) content | ppm | ISO 18287 |
| 16 EPA-PAH sum | % (by weight) | ISO 18287 |
| Flash point (small scale equilibrium) | °C | ISO 3679 |
| Dynamic viscosity of the molten pitch at 100 °C to 300 °C | mPa · s | DIN 53019 |
| BET surface area | m² g⁻¹ | ISO 9277 |
| Tapped bulk density | g cm⁻³ | Internal method according to DIN 51916 |

## Claims

1. A method for producing carbon coated particles, the method comprising:
- providing a number of particles to be coated
- producing an intermediate molten pitch product
- directly dispersing the intermediate pitch product on the particles
- subsequently carbonizing the particles.

2. The method according claim 1 wherein the intermediate molten pitch product is neither solidified, nor dissolved, nor remelted prior to dispersing.

3. The method according to claim 1 or 2 wherein the intermediate molten pitch product has the following characteristics:
- Melt viscosity: 10-3000 mPa.s at the processing temperature
- Softening point <200°C

4. The method according to claim 3 wherein the intermediate molten pitch product additionally has the following characteristics:
- Coke value 30-70 %
- Flash point >200 °C
- quinoline insoluble matter below 1 %

5. The method according to any of the above claims wherein the intermediate molten pitch product is based on petroleum-based raw materials.

6. The method according to claim 5, wherein the pitch product is **characterized by** a flashpoint of above 250°C and a softening point between 100 and 200 °C Mettler.

7. The method according to any of claims 1 to 4 wherein the intermediate molten pitch product is coal tar-based or petroleum-based distillation residue, or a blend thereof, or a blend of the distillation residue with petroleum-based pitch having a softening point 130-300°C Mettler.

8. The method according to claim 7, wherein the distillation residue is coal tar distillate-based or petroleum distillate-based and has a softening point between 70-120°C and a coking value of 40-59 % (ALCAN)

9. The method according to claim 7 or 8, wherein the pitch additionally comprises a petroleum-based pitch having a softening point between 110-270°C.

10. The method according to any of the above claims wherein dispersing comprises spraying the molten intermediate pitch product on the particles which meanwhile are being fluidized, or wherein dispersing comprises mixing the molten intermediate pitch product and the particles by intensive mixing.

11. The method according to any of the above claims wherein carbonizing is performed by heat treatment in an inert gas atmosphere at a temperature between 550-1400°C.

12. The method according to any of the above claims wherein the amount of intermediate molten pitch product dispersed on the particles is at least 10% by weight thereby obtaining aggregates of carbon coated particles.

13. A method of manufacturing a battery electrode comprising the method of any of the above claims.
